# EUROPEAN PATENT APPLICATION

(11) **EP 3 306 947 A1**
(43) Date of publication of application: **11.04.2018**
(21) Application number: 16848791.6
(22) Date of filing: 01.08.2016
(51) Int. Cl.: H04N 21/60, H04N 21/63, H04N 21/647, H04N 21/61

(54) **VIDEO PROCESSING DEVICE, METHOD FOR DRIVING VIDEO PROCESSING DEVICE, VIDEO RELAY DEVICE, METHOD FOR DRIVING VIDEO RELAY DEVICE, AND COMPUTER-READABLE RECORDING MEDIUM**

(30) Priority: 23.09.2015 KR 20150134705
(71) Applicant: Samsung Electronics Co., Ltd., Suwon-si, Gyeonggi-do 16677 (KR)
(72) Inventor: CHOI, Jeong-il, Seoul 04717 (KR)
(74) Representative: Appleyard Lees IP LLP
(86) International application number: PCT/KR2016/008421
(87) International publication number: WO 2017/052065

(57) **Abstract**

The present invention relates to a video processing device, a method for driving the video processing device, a video relay device, a method for driving the video relay device, and a computer-readable recording medium. An image processing system according to an embodiment of the present invention may comprises: a video relay device for providing an image signal to a user device; and a video processing device for dividing an image signal, transmitting the divided image signals to the video relay device through a plurality of different communication networks, and adjusting the amount of data transmission of the plurality of communication networks according to traffic states of the plurality of communication networks, respectively.

## Description

### Technical Field

The present invention relates to a video processing apparatus, a method for driving the video processing apparatus, a video relaying apparatus, a method for driving the video relaying apparatus, and a computer-readable recording medium, and more particularly, to a video processing apparatus which allows the user to quickly and stably use data, for example, in home through heterogeneous networks, a method for driving the video processing apparatus, a video relaying apparatus, a method for driving the video relaying apparatus, and a computer-readable recording medium.

### Background Art

In recent years, with diversification of as a mobile device, a smart phone, an MP3 player, a portable multimedia player (PMP), a home manager, a notebook, other various hand devices, and a multimedia data sharer, data (or content) sharing between devices is increased through diversification of connection methods between the devices. The connection method is also changed according to diversification of a stream data supply device in home.

Since it starts to provide a high-quality high-definition (HD) broadcast with 3D, blu-ray, and ultrahigh definition (UHD), multimedia files tend to be large capacity in recent years. With web (for example, youtube)-based HD streaming development due to high-speed Internet, service diversification, and rapid increase in high-quality service, an amount of traffic data is increased rapidly and this phenomenon is no exception in home.

The technology of a settop box (STB) which simply starts from broadcasting stream decoding is changed to a headless gateway, a video gateway, and an Internet protocol client (IPC) structure in markets in recent years. Even in terms of contents, the settop box (STB) expands the technical functions, for example, mutual transfer of media and data, transfer of large-capacity data, and the like, such as digital living network alliance (DLNA), allshare, smarthome, and the like, not transfer of simple broadcasting stream and thus the STB function in home is increasingly diversified and smart.

In recent years, with development possibility of the headless gateway in exhibition trend and the like and traffic increase, it is determined that the amount of a stream transmitted in home is increasingly increased even in the future as described above.

Therefore, there is a need for a method for seamlessly connecting data of the increasingly fast increased amount through a smarter connection process between devices, for example, in home.

### Detailed description of the invention

### Technical Problem

The object of the present invention is to provide a video processing apparatus which allows the user to quickly and stably use data, for example, in home through heterogeneous networks, a method for driving the video processing apparatus, a video relaying apparatus, a method for driving the video relaying apparatus, and a computer-readable recording medium.

### Technical Solution

The present invention is to provide a video processing system including a video relaying apparatus configured to provide an image signal to a user apparatus and a video processing apparatus configured to divide the image signal, transmit divided image signals to the video relaying apparatus through a plurality of communication networks different from each other and adjust data transmission amounts of the plurality of communication networks according to traffic states of the plurality of communication networks.

The present invention is to provide a video processing apparatus which is coupled to an external apparatus through a plurality of communication networks, the video processing apparatus including a communication interface configured to divide an image signal and transmit divided image signals to the external apparatus through the plurality of communication networks and a processor configured to adjust data transmission amounts of the plurality of communication networks according to traffic states of the plurality of communication networks.

The processor may adjust the data transmission amounts in response to degree of congestion in the plurality of communication networks being equal to or larger than a preset threshold value.

The processor may include a parser configured to divide the received image signal.

The video processing apparatus may further include a display configured to notify a user that the processor is being operated.

The communication interface may include a plurality of communication modules configured to process and transmit the image signal with different standards related to the plurality of communication networks.

The plurality of communication modules may include a short-range communication module.

The present invention is to provide a video relaying apparatus which is coupled to an external apparatus through a plurality of communication networks, the video relaying apparatus including a communication interface configured to receive divided and transmitted image signals through the plurality of communication networks from the external apparatus and receive the image signals which data transmission amounts of the plurality of communication networks thereof are adjusted according to traffic states of the plurality of communication networks and a signal processor configured to aggregate the divided and transmitted image signals and provided the aggregated image signal to a user apparatus.

The communication interface may include a plurality of communication modules configured to receive the divided and transmitted image signals with different standards related to the plurality of communication networks.

The plurality of communication modules may include a short-range communication module.

The signal processor may include a multiplexer configured to aggregate the divided and transmitted image signals.

The present invention is to provide a driving method of a video processing apparatus coupled to an external apparatus through a plurality of communication networks, the method including the steps of dividing an image signal and transmitting divided image signals to the external apparatus through the plurality of communication networks different from each other and adjusting data transmission amounts of the plurality of communication networks according to traffic states of the plurality of communication networks.

The step of adjusting the data transmission amounts may include adjusting the data transmission amounts in response to degree of congestion in the plurality of communication networks is equal to or larger than a preset threshold value.

The driving method may further include the step of dividing the received image signal according to the traffic states of the plurality of communication networks.

The driving method may further include the step of notifying a user that an operation of adjusting the data transmission amounts is being performed.

The step of transmitting may include processing and transmitting the image signal with different standards related to the plurality of communication networks.

The different standards related to the plurality of communication networks may include a short-range communication method.

The present invention is to provide a driving method of a video relaying apparatus coupled to an external apparatus through a plurality of communication networks, the method including the steps of receiving divided and transmitted image signals through the plurality of communication networks and receiving the image signals that data transmission amounts of the plurality of communication networks are adjusted according to traffic states of the plurality of communication networks and aggregating the divided image signals and provide an aggregated image signal to a user apparatus.

The step of receiving the image signals may include receiving the divided and transmitted image signals with different standards related to the plurality of communication networks.

The different standards related to the plurality of communication networks may include a short-range communication method.

The present invention is to provide a computer-readable recording medium including a program for executing a driving method of a video processing apparatus coupled to an external apparatus through a plurality of communication networks, the method including the steps of dividing an image signal and providing divided image signals to the external apparatus through the plurality of communication networks and adjusting data transmission amounts of the plurality of communication networks according to traffic states of the plurality of communication networks.

### Effect of the invention

In the embodiment of the present invention, the network bandwidth may be further secured and thus the transmission efficiency of data with large capacity may be obtained. The network may be automatically selected by monitoring the changed data amount and traffic amount and the link aggregation may be dynamically performed based on the threshold value of the selected network and the used data amount. Accordingly, sharing effect of data which is transmitted only in the existing media in home may be obtained.

### Description of Drawings

FIG. 1 is a diagram illustrating a video processing system according to an embodiment of the present invention,
FIG. 2 is a diagram illustrating a video relaying apparatus and a user apparatus interlocked to a video processing apparatus of FIG. 1,
FIG. 3 is a diagram illustrating a video relaying apparatus and a video processing apparatus coupled through heterogeneous networks,
FIG. 4 is a block diagram illustrating a detailed structure of a video relaying apparatus of FIG. 1,
FIG. 5 is a block diagram illustrating a detailed structure of a video processing apparatus illustrated in FIG. 1 according to a first embodiment of the present invention,
FIG. 6 is a block diagram illustrating a detailed structure of a video processing apparatus illustrated in FIG. 1 according to a second embodiment of the present invention,
FIG. 7 is a block diagram illustrating a detailed structure of a controller illustrated in FIG. 6,
FIG. 8 is a block diagram illustrating a detailed structure of a link dynamic processor of FIG. 5 according to another embodiment of the present invention,
FIG. 9 is a diagram explaining an OSI 7 layers of a video processing apparatus according to an embodiment of the present invention,
FIG. 10 is a diagram illustrating a structure of a sublayer illustrated in FIG. 9,
FIG. 11 is a diagram illustrating an operation process of an aggregation controller of FIG. 10,
FIG. 12 is a flowchart illustrating a driving process of a video relaying apparatus according to an embodiment of the present invention,
FIG. 13 is a flowchart illustrating a driving process of a video processing apparatus according to an embodiment of the present invention, and
FIG. 14 is a diagram illustrating another driving process of a video processing apparatus according to another embodiment of the present invention.

### [Mode for invention]

Hereinafter, exemplary embodiments of the invention will be described more fully with reference to the accompanying drawings.

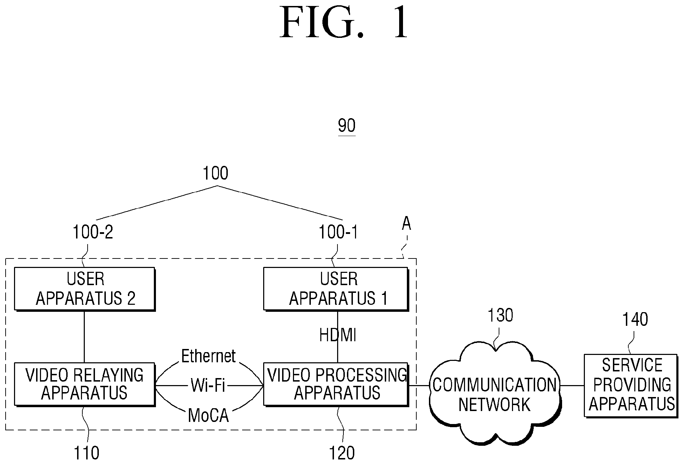

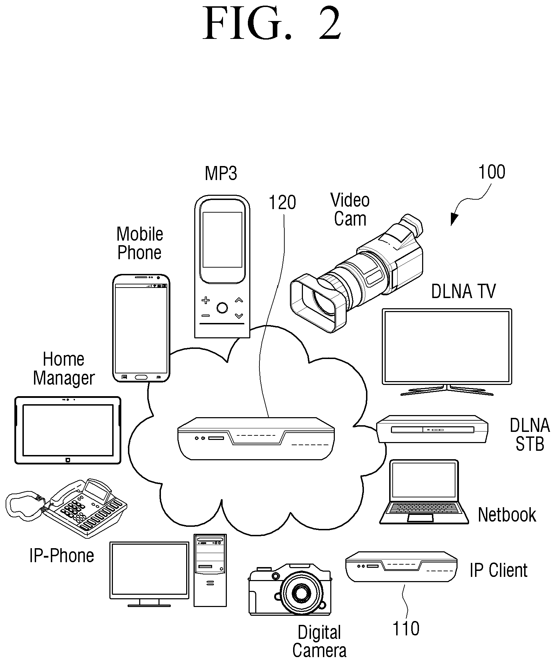

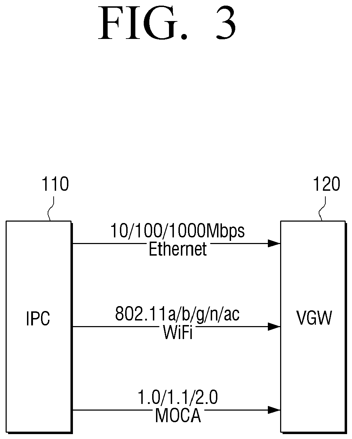

FIG. 1 is a diagram illustrating a video processing system according to an embodiment of the present invention, FIG. 2 is a diagram illustrating a video relaying apparatus and a user apparatus interlocked to a video processing apparatus of FIG. 1, and FIG. 3 is a diagram illustrating a video relaying apparatus and a video processing apparatus coupled through heterogeneous networks.

As illustrated in FIG. 1, a video processing system 90 according to an embodiment of the present invention includes all or a part of a user apparatus 100, a video relaying apparatus 110, a video processing apparatus 120, a communication network 130, and a service providing apparatus 140.

Here, the phrase "includes all or a part" means that partial components such as the communication network 130 may be omitted in the system 90, for example, that the video processing apparatus 120 and the service providing apparatus 140 may perform direct communication (for example, peer to peer (P2P)). For a thorough understanding of the present invention, the system 90 will be described to include all the components.

As illustrated in FIG. 2, the user apparatus 100 may include various electronic apparatuses, for example, a television (TV), a portable phone, a desktop computer, a laptop computer, a tablet personal computer (PC), an MP3 player, a portable multimedia player (PDP), and the like. The user apparatus 100 may be divided into a user apparatus 1 100-1 coupled to the video processing apparatus 120 such as a settop box (STB) operating as a video gateway (VGW) in home A and a user apparatus 2 100-2 coupled to the video relaying apparatus 110 to operate. The user apparatus 1 100-1 may be installed in a living room and the like in the home A and the user apparatus 2 100-2 may be installed in rooms of family members. The user apparatus 1 100-1 may be coupled to the video processing apparatus 120 through a high definition multimedia interface (HDMI) cable. Here, HDMI is one of interface standards which may aggregate and transmit uncompressed digital video and audio signals.

The user apparatus 1 100-1 may use service provided from the service providing apparatus 140 according to a request of the user. Here, the service may be, for example, broadcast service provided from a broadcasting station. Further, the user apparatus 2 100-2 may request broadcast service to the video relaying apparatus 110 and receive a desired broadcast. The user apparatus 1 100-1 and the user apparatus 2 100-2 may use various types of service such as Internet service and the like other than the broadcast service and thus in an embodiment of the present invention, the service is not limited to specific service.

The video relaying apparatus 110 may be installed, for example, in each room of the home A and may include an Internet protocol (IP) client which is coupled to the video processing apparatus 120 to operate. Further, the video relaying apparatus 110 may further include a wireless local area network (WLAN) sharer and the like. The video relaying apparatus 110 in an embodiment of the present invention receives a user command requested by the user through the user apparatus 2 100-2 and transmits the user command to the video processing apparatus 120. The video relaying apparatus 110 may process an image signal provided from the video processing apparatus 120 according to the received user command and provide the processed image signal to the user apparatus 2 100-2. In starting of packet transmission in the home, various interfaces in the video relaying apparatus 110 have already maintained a physically linked-up state. In other words, heterogeneous networks which are a plurality of communication networks different from each other have been already coupled to each other.

As illustrated in FIG. 3, the video relaying apparatus 110 may be coupled to the video processing apparatus 120 through heterogeneous networks such as Ethernet, WiFi, and multimedia over coak alliance (MoCA), and the like and may divide and receive an arbitrary image signal from the video processing apparatus 120 through the heterogeneous networks. The video relaying apparatus receives an image signal of which a transmission amount is adjusted according to traffic states of the heterogeneous networks during the division reception. In other words, the video relaying apparatus 110 receives the image signal of which the transmission amount is dynamically changed from the video processing apparatus 120. Accordingly, the user apparatus 2 100-2 may rapidly receive data without break. Here, MoCA means the technology that may provide the existing broadcasting using a coaxial cable in home as a medium and simultaneously perform Internet communication.

To this end, the video relaying apparatus 110 may be coupled to the video processing apparatus 120 through a wired communication line (for example, cable) in a wired manner such as Ethernet and the like and may directly perform the above-described operation by performing a pairing operation in advance in a wireless manner such as WiFi and the like. Accordingly, the video relaying apparatus 110 may receive and process the image signal of which the transmission amount is dynamically changed from the video processing apparatus 120 through the heterogeneous network. Other detailed contents will be described later again.

The video processing apparatus 120 may operate as a video gateway. In other words, the video processing apparatus 120 according to an embodiment of the present invention may directly transmit the image signal to the user apparatus 1 100-1 by performing the same operation as an existing settop box, but the video processing apparatus 120 may allow the image signal to be provided to the user apparatus 2 100-2 via the video relaying apparatus 110. For example, the video processing apparatus 120 may restore the received compressed image signal and transmit the restored image signal to the user apparatus 1 100-1 and may directly transmit the received compressed image signal to the video relaying apparatus 110 in a compressed state. The video processing apparatus 120 may restore the compressed image signal and transmit the restored image signal to the video relaying apparatus 110 in any degree and thus this is not limited thereto.

To transmit an image signal, for example, the video signal, the video processing apparatus 120 according to an embodiment of the present invention may be in a state coupled to the video relaying apparatus 110 in a wired/wireless manner through the heterogeneous networks, divide and transmit the image signal to the heterogeneous networks in the image signal transmission, and adjust a transmission amount of the transmitted image signal by checking (monitoring) the traffic states of the heterogeneous networks. For example, the data processing rates may be different from each other in the communication methods having different standards related to the heterogeneous networks. Even in the communication methods having the same standard, the data processing rates may be different according to versions and thus the video processing apparatus may synthetically determine the traffic states through the monitoring. Directly, the wired data processing rate may be larger than the wireless data processing rate.

The video processing apparatus 120 may include a plurality of tuners to process the image signal required by various types of user apparatuses 100 as illustrated in FIG. 2. Accordingly, in response to the request for the image signal received through each of the tuners from the user being present, the video processing apparatus 120 suitably performs data processing by providing the image signal received through the corresponding tuner to the user apparatus 1 100-1 or the video relaying apparatus 110.

The communication network 130 includes both wired and wireless communication networks. Here, the wired communication network includes an Internet network such as a cable network or a public switched telephone network (PSTN) and the wireless communication network includes code division multiple access (CDMA), wideband CDMA (WCDMA), global system for mobile communication (GSM), evolved packet core (EPC), long term evolution (LTE), a Wibro network, and the like. The communication network 130 according to an embodiment of the present invention is not limited thereto and the communication network may be used for, for example, a cloud computing network and the like under cloud computing environments as an access network of a next-generation mobile communication system to be implemented in the future. For example, in response to the communication network 130 being the wired communication network, an access point in the communication network 130 may access a switching office of a telephone company and the like and in response to the communication network 130 being in the wireless communication network, the access point in the communication network 130 may access a serving general packet radio service (GPRS) support node (SGSN) or a gate away GPRS support node (GGSN) which is operated by a communication company and process data or may access various relays such as base transmission station (BTS), NodeB, e-NodeB, and the like and process data.

The communication network 130 may include an access point. The access point may include a small base station such as a femto or pico base station mainly installed within a building. Here, the femto or pico base station may be divided according to the maximum number of user apparatuses 1 100-1 or video relaying apparatuses 110 accessible to the base station in terms of small base station division. The access point includes a short-range communication module configured to perform short-range communication (Zigbee, WiFi and the like) with the user apparatus 1 100-1. The access point may use transmission control protocol/Internet protocol (TCP/IP) or real-time streaming protocol (RTSP) for wires communication. For example, the short-range communication may be performed with various standards such as Bluetooth, Zigbee, infrared data association (IrDA), radio frequency (RF) (for example, ultra-high frequency (UHF) and very high frequency (VHF)), ultra wideband (UWB), and like in addition to WiFi. In this example, the access point may extract a position of a data packet, designate an optimal communication path with respect to the extracted position, and transfer the data packet to next apparatus (for example, user apparatus 100) along the designated communication path. The access point may share multiple lines in a general network environment and for example, the access point may include a router, a repeater, a relay, and the like

The service providing apparatus 140 may include a broadcasting station server configured to provide broadcast service or a search server configured to provide service of search portal company. In other words, the service providing apparatus 140 may operates as an image service source required by the user according to an embodiment of the present invention. Accordingly, in response to the communication network 130 being omitted in the system 90, the service providing apparatus 140 may be a blu-ray disc (BD) reproducing apparatus or other media apparatuses which are directly operated with the video processing apparatus 120.

As the configuration result, in an embodiment of the present invention, the network bandwidth may be further secured and thus the transmission efficiency of data with large capacity may be obtained. The network may be automatically selected by monitoring the changed data amount and traffic amount and the link aggregation may be dynamically performed based on the threshold value of the selected network and the used data amount. Accordingly, sharing effect of data which is transmitted only in the existing media in home may be obtained.

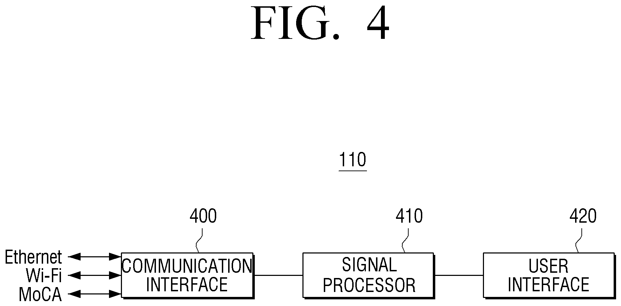

FIG. 4 is a block diagram illustrating a detailed structure of the video relaying apparatus of FIG. 1.

As illustrated in FIG. 4, the video relaying apparatus 110 according to an embodiment of the present invention includes all or a part of a communication interface 400, a signal processor 410, and a user interface 420.

Here, the phrase "includes all or a part" means that partial components such as the user interface 420 may be omitted in the video relaying apparatus 110 or may be integrated into other components such as the signal processor 410. For a thorough understanding of the present invention, the video relaying apparatus 110 will be described to include all the components.

The communication interface 400 is coupled to the video processing apparatus 120 of FIG. 1 through heterogeneous networks and performs communication. Here, the heterogeneous networks includes an Ethernet cable or a MoCA-based coaxial cable or a short-range wireless communication method such as WiFi. The communication interface 400 may perform communication according to standards related to the heterogeneous networks and thus include a plurality of communication modules. For example, the MoCA started by specializing transmission of media may be processed in various ranges such as a bandwidth, throughput, and the like as shown in Table 1 in the communication interface 400. The communication interface is related to the processing rate in the data transmission processing. Table 1 shows various performances of MoCA.

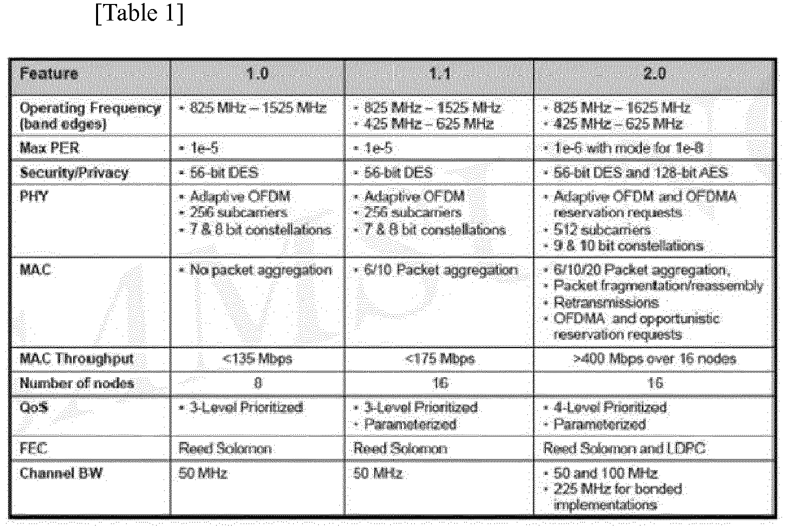

WiFi which is in charge of wireless communication in a short distance may be processed in various ranges as shown in Table 2 in the communication interface 400. The communication interface is related to data processing rate using WiFi. Table 2 shows various performances of WiFi.

**[Table 2]**

| Generation | Standard | Frequency band | Bandwidth | Channel bonding | Protocol | MIMO | PHY rate |
|---|---|---|---|---|---|---|---|
| | b | 2.4G | 22 MHz | - | DSSS | N/A | 11 Mbps |
| | a | 5.0G | 20 MHz | - | OFDM | N/A | 54 Mbps |
| | g | 2.4G | 20 MHz | - | OFDM | N/A | 54 Mbps |
| 4 | n | 2.4G/ 5.0G | Mendatory: 20MHz | 2 CH | OFDM | ∼4*4 | ∼600 Mbps |
| | | | Optional: 40MHz | | | | |
| 5 | ac | 5.0G | Mendatory: 20MHz/40MHz/ 80MHz | 8 CH | OFDM | ∼8*8 | ∼6930 Mbps |
| | | | Optional: 160 MHz | | | | |

The communication interface 400 transmits the image signals received through the modules to the signal processor 410. Through the process, the communication interface 400 may perform an operation such as data conversion and the like. For example, the communication interface may perform an operation such as release of the compressed video signal.

The communication interface 400 may transmit the image signal in response to a user command requested by the user apparatus 2 100-2 under control of the signal processor 410.

The signal processor 410 aggregates the image signals having different standards (for example, different communication methods) received through the communication interface 400 and provides the aggregated image signal to the user apparatus 2 100-2. In other words, the signal processor 410 may generate one stream by aggregating the image signals transmitted with different standards and provide the generated stream to the user interface 2 100-2 through the communication interface 400.

The signal processor 410 may be in charge of control of the communication interface 400 and the user interface 420. For example, in response to a user command, for example, a command for viewing a specific program of a broadcast channel being received through the user interface 420, the signal processor may control the received user command to be provided to the video processing apparatus 120 through the communication interface 400.

The user interface 420 may include a signal receiver and a physical button such as a power button and the like. In response to a broadcasting program of a specific channel being requested by the user, for example, a remote controller, the user interface may receive an infrared (IR) signal corresponding to the corresponding request through the signal receiver and provide the received IR signal to the signal processor 410.

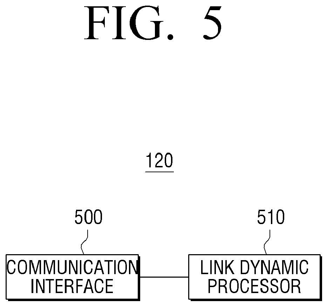

FIG. 5 is a block diagram illustrating a detailed structure of the video processing apparatus illustrated in FIG. 1 according to a first embodiment of the present invention.

As illustrated in FIG. 5, the video processing apparatus 120 according to the first embodiment of the present invention includes all or a part of a communication interface 500 and a link dynamic processor 510. Here, the phrase "include all or a part" has the same meaning as those described above.

The communication interface 500 is coupled to the video relaying apparatus 110 illustrated in FIG. 1 through the heterogeneous networks and operates. The detailed description therefor has been fully made through the communication interface 400 of FIG. 4 and thus may be replaced with the contents therefor.

The communication interface 500 may further include a connector configured to couple the communication interface and the user apparatus 1 100-1 and a HDMI module configured to process the image signal with a HDMI standard as illustrated in FIG. 1.

Further, the communication interface 500 may include various modules configured to perform communication with the communication network 130. For example, the communication interface may receive an image signal of a broadcasting station through the communication network 130 or a TCP/IP-based image signal from a server of an Internet search company and include a short-range communication module configured to process an image signal by performing short-range communication in communication with a peripheral access point (AP).

In response to a service request being present from the user apparatus 2 100-2, the link dynamic processor 510 receives a data packet of an image signal provided from the service providing apparatus 140 in response to the service request. In response to the data packet being received, the link dynamic processor 510 divides the received data packet and transmits the divided data packets by checking traffic states of heterogeneous networks before the link dynamic processor 510 transmits the received data packet to the video relaying apparatus 110. The link dynamic processor 510 monitors the traffic states in real time and adjusts transmission amounts of data transmitted through the heterogeneous networks according to the monitoring result. In response to the degree of congestion in a specific network being determined to be larger than a preset threshold value during the transmission process, the link dynamic processor may not transmit the data to the corresponding network. The link dynamic processor 510 may dynamically change a selected network according to the traffic state of the network and further transmit an image signal requested by the user apparatus 2 100-2 to the video relaying apparatus 110 by dynamically changing the transmission amount of transmitted data.

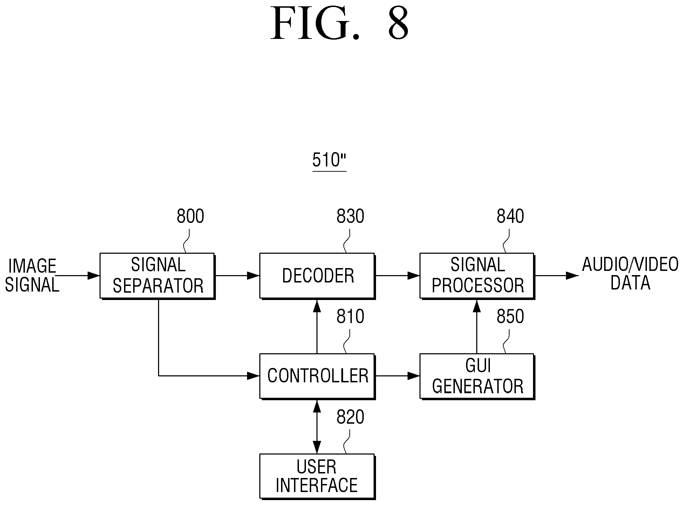

In addition, the link dynamic processor 510 may be interlocked with the user apparatus 1 100-1 and perform various operations to be interlocked with the communication network 130 and detailed description therefor will be described in detail later (see FIG. 8).

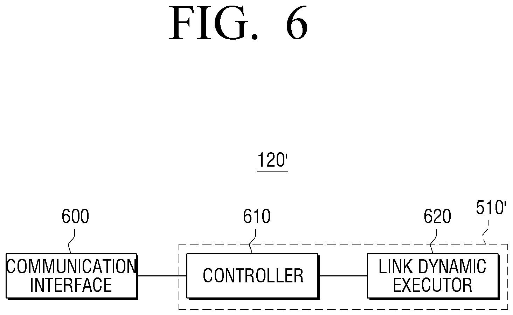

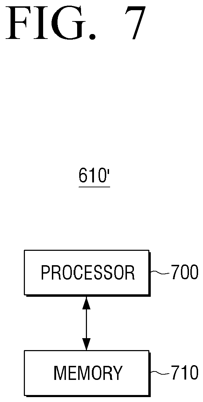

FIG. 6 is a block diagram illustrating a detailed structure of the video processing apparatus illustrated in FIG. 1 according to a second embodiment of the present invention and FIG. 7 is a block diagram illustrating a detailed structure of a controller illustrated in FIG. 6.

As illustrated in FIG. 6, a video processing apparatus 120' according to another embodiment may include a communication interface 600, a controller 610, and a link dynamic executor 620.

As compared with the video processing apparatus 120 illustrated in FIG. 5, the video processing apparatus 120' illustrated in FIG. 6 is different from the video processing apparatus 120 of FIG. 5 in that a link dynamic processor is divided into a controller 610 configured to perform a control function and a link dynamic executer 620 configured to perform link dynamic processing.

In other words, the link dynamic processor 510 of FIG. 5 may execute one software program to perform a control function and link dynamic processing. However, the link dynamic processor 510' of FIG. 6 is divided into the controller 610 and the link dynamic executor 620 in hardware. Accordingly, it can be seen that the link dynamic executor 620 performs an operation for dynamically processing link (for example, connection) with the video relaying apparatus 110 coupled through the heterogeneous networks. To this end, the link dynamic executor 620 may store and execute the program for the link dynamic processing.

In response to a processor 700 and a memory 710 being included in the controller 610 of FIG. 6 as illustrated in FIG. 7, the controller 610 may load and store the program stored in the link dynamic executor 620 of FIG. 6 into the memory 710 in initial driving of the video processing apparatus 120. Then, in response to the link dynamic processing being inevitably performed, the controller may rapidly perform data processing by executing the corresponding program stored in the memory 710 as compared with the controller 610 of FIG. 6. In other words, since the controller 610 of FIG. 6 operates through a method for executing the corresponding program by controlling the link dynamic executor 620 and receiving the executing result in response to the dynamic processing of the link being necessary, the data processing rate of the controller 610 of FIG. 6 may be smaller than that of the controller of FIG. 7.

Except for this, the communication interface 600, the controller 610, and the link dynamic executer 620 illustrated in FIG. 6 are not so different from the communication interface 500 and the link dynamic processor 510 of FIG. 5 and thus the detailed description therefor may be replaced with the contents thereof.

FIG. 8 is a block diagram illustrating a detailed structure of the link dynamic processor of FIG. 5 according to another embodiment of the present invention.

As illustrated in FIG. 8, a link dynamic processor 510" according to another embodiment of the present invention includes all or a part of a signal separator 800, a controller 810, a user interface 820, a decoder 830, a signal processor 840, and a graphic user interface (GUI) to perform a control function. Here, the phrase "include all or a part" has the same meaning as those described above.

The signal separator 800 divides an input image signal into a video signal and an audio signal and provides the divided signals to the decoder 830 and in response to additional information being included in the image signal, the signal separator 800 separates the additional information from the image signal and provides the separated additional information to the controller 810. The additional information provided to the controller 810 may be stored in an internal memory of the controller 810 as illustrated in FIG. 7 or in a separate storage unit. Here, the additional information may include various information such as electronic program guide (EPG) information, caption information, and the like.

The controller 810 may control the decoder 830 to perform decoding on the video signal and the audio signal input from the decoder 830. In response to the EPG information being inevitably displayed in a screen according to the request of the user, the controller 810 controls the GUI generator 850 to output an EPG generation screen and thus an image synthesis is performed in the signal processor 840.

The user interface 820 receives a user command from a remote controller and transfers the user command to the controller 810. To this end, the user interface 820 may include a signal receiver configured to receive and process an IR signal of the remote controller. The user interface 820 may include a physical button such as a power button to which the user command is input and the like.

The decoder 830 releases compression for the input video signal and audio signal. In other words, the decoder 830 restores the compressed video signal to an original signal. To this end, the decoder 830 may include a video decoder and an audio decoder. The decoder 830 is well known and thus detailed description therefore will be omitted.

The signal processor 840 may perform data scaling on the decoded video signal, for example, according to the resolution of a digital TV (DTV) or perform a post processing operation on the decoded audio signal. Here, the post processing operation may include an equalization operation and the like.

The GUI generator 850 may generate various UI screens and the GUI generator may typically generate the EPG screen displaying a broadcasting program list and provide the EPG screen to the signal processor 840. For example, in response to a menu button in the remote controller being selected by the user, the corresponding user command may be transferred to the controller 810 and the GUI generator 850 may generate and output the EPG screen under control of the controller 810.

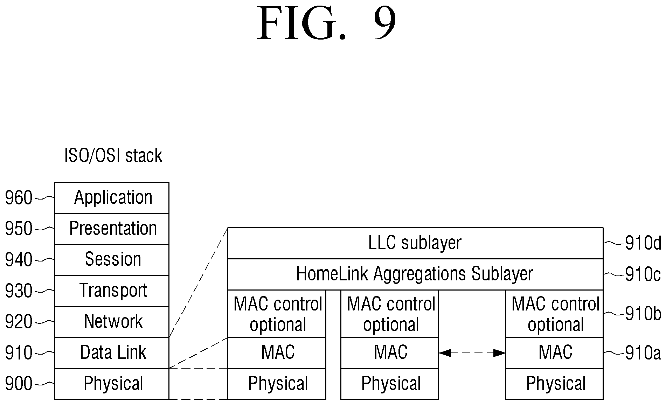

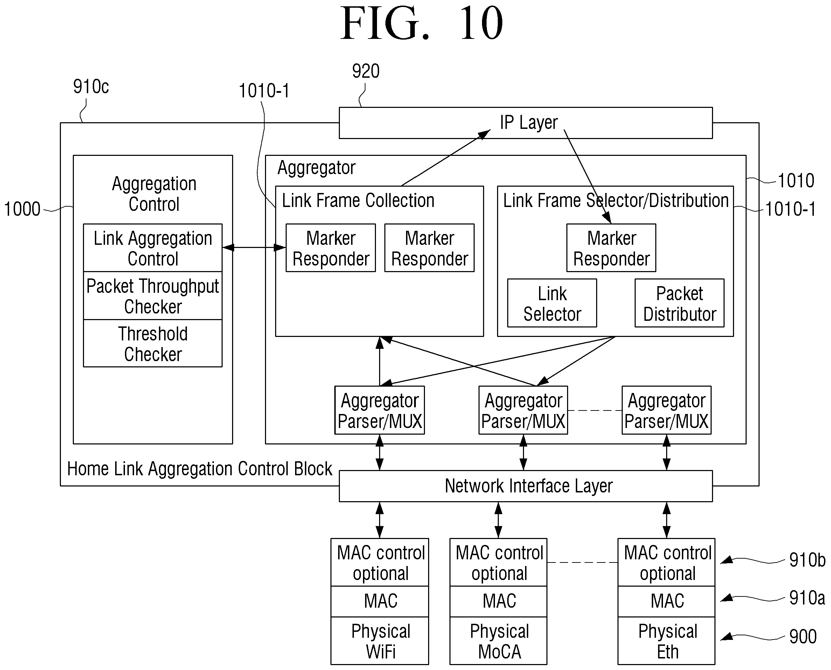

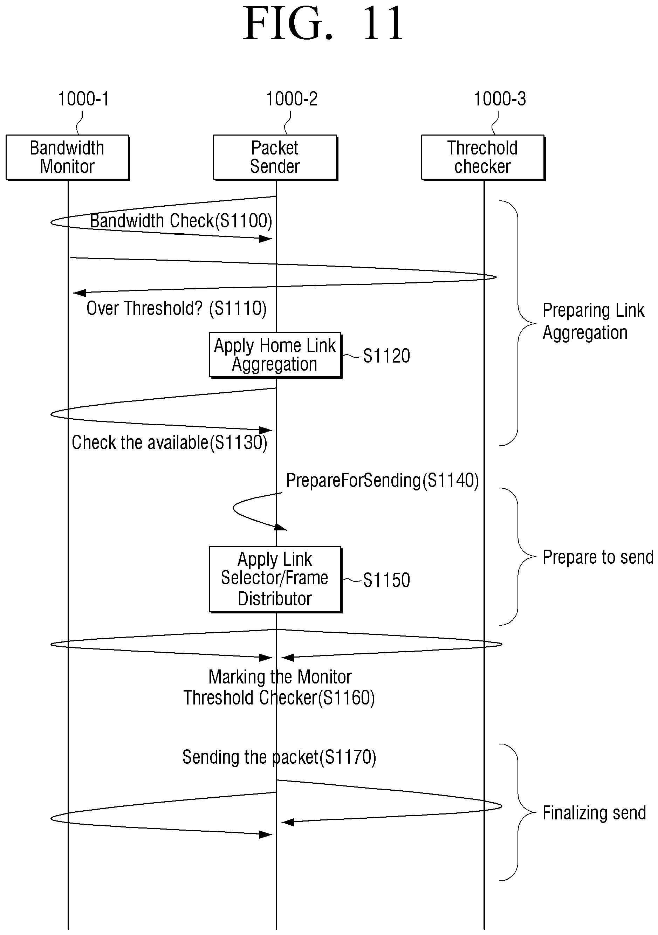

FIG. 9 is a diagram explaining an OSI 7 layers of a video processing apparatus according to an embodiment of the present invention, FIG. 10 is a diagram illustrating a structure of a sublayer illustrated in FIG. 9, and FIG. 11 is a diagram illustrating an operation process of an aggregation controller of FIG. 10.

For clarity, referring to FIGS. 9 and 10 with FIG. 1, a signal processing system, for example, open system interconnection (OSI) layer of a video processing apparatus 120 according to an embodiment of the present invention may include total 7 steps of a physical layer 900-a data link layer 910-a network layer 920-a transport layer 930-a session layer 940-a presentation layer 950-an application layer 960. The change of the layers may have a characteristic which may not affect other layers at all.

The physical layer 900 corresponds to a layer which transmits data received from an upper layer (for example, data link) in bit units through a communication line. The physical layer specifies mechanical and electrical items such as a cable, a connection device, and the like and handles a signal method for physically coupling two nodes on a network.

The data link layer 910 is a group of bits between adjust open systems and is a layer which transfers a frame as transmission units without an error and provides reliable data transmission. Here, the frame is transmission units which receives a packet in transmission units from the upper network layer 920 and adds meaningful information such as an address or other control information (for example, bits) to a packet head and a packet tail. The data link layer 910 may perform an operation such as physical address, network topology, line use rule, error rule, error detection, frame transfer, flow control, division in data transmission units, order control, error control, data flow control, and the like.

The data link layer 910 serves to entirely observe flow-in and out of data through the physical layer 900. The data link layer 910 is divided into two sublayers in institute of electrical and electronics engineers (IEEE). For example, the data link layer is divided into a logical link control (LLC) layer and a media access control (MAC) layer. The LLC layer is related to the network layer 920 and the MAC layer is related to the physical layer 900. The MAC layer is directly related to a network interface card (NIC). The layer may convert data received from the network layer 920 in frame units and transmit the converted data to the lowermost layer. Equipment included in the layer is a switch and a bridge. A cyclical redundancy check (CRC) is related to the layer.

The network layer 920 provides connectivity and communication path selection using a data transfer function between the adjacent open systems provided from the data link layer 910 and perform data transmission and relay and a difference adjusting function of network quality in response to passing through several networks. The routing protocol selects an optimal path through networks coupled to each other and transmits information along the optical path. In summary, the network layer 920 allows each packet to be successfully and effectively transferred to a final destination from a starting point. The layer supervises transfer of end-to-end of packets. In other words, the layer only confirms that the packet is transmitted and received well.

The transport layer 930 performs a function to set, maintain, and synchronize interactions between communication apparatuses as conversation controllers of a network. The transport layer provides a function for confirming and setting validity of user connection (connection between processors) and establishes and synchronizes virtual connection called a session. Further, the transport layer serves to construct, manage, and terminate the session between applications. The transport layer synchronizes conversation between the presentation layers 950 and manages data exchanges between the presentation layers.

The session layer 940 performs a function for providing connection service between application programs of both communicating systems and controlling the connection. In other words, the session layer 940 serves to forcibly cutting connection between a server and a client or reconnecting the server and the client. The main functions includes connection setup, maintenance, termination, forced termination, reconnection, conversation control, and the like. Representative protocol and interface includes structured query language (SQL), remote procedure call (RPC), digital network architecture session control protocol (DNA SCP), appletalk session protocol (ASP), network basic input output system (NetBIOS), and the like. The session layer may be implemented with a server and a client through socket programming.

The presentation layer 950 ensures interoperability between communication apparatuses. In other words, the presentation layer provides a function for performing necessary translation for control codes, characters, graphic characters, and the like differently used between two apparatuses and allowing the two apparatuses to consistently understand transmission data. In summary, the presentation layer changes a data presentation method so that a transmitter and a receiver commonly understood the transmission data. The presentation layer also performs data encryption, data decryption, and data compression and decompression for efficient transmission.

The application layer 960 provides a user interface which allows the user or application program to access a network and provides service such as E-mail, file transmission, shared data base (DB) management, and the like. The application layer supports application processors of the user. The application layer serves as a window which allows the application processors (user, application program) to exchange useful information therebetween by providing means for accessing network environments by the application processors.

In such a layer structure, for example, in starting of packet transmission in home in the video processing apparatus 120 according to an embodiment of the present invention, various interfaces (for example, heterogeneous networks) maintain a physical link-up state in advance. Accordingly, the video processing apparatus determines the current traffic amounts in the home according to media interfaces by checking traffics according to the interfaces. The video processing apparatus applies a so-called link aggregation algorithm according to an embodiment of the present invention in response to the traffic amount is larger than a threshold value after the checking of the traffics.

In such a state, the video processing apparatus 120 passes the step to a home link aggregation sublayer 910c as illustrated in FIG. 9 and determines data sharing between interfaces. The home link aggregation sublayer 910c according to an embodiment of the present invention may include an aggregation controller 1000 and an aggregator 1010 as illustrated in FIG. 10.

In response to each of packets being transferred, the corresponding packet is divided into and processed as illustrated in FIG. 10 and the aggregation controller 1000 may control all the operation. The aggregation controller 1000 may include a monitor 1000-1, a packet sender 1000-2, a checker 1000-3, and the like as illustrated in FIG. 11.

The aggregator 1010 substantially determines where to and how to transmit packets, generates markers corresponding to the corresponding determination result, and distributes the packets corresponding to the corresponding markers to interfaces in a link frame selector and distributor 1010-1. Here, the interfaces means the above-described heterogeneous networks. To this end, the aggregator selects transmittable media among diversified media using a link selector determined in the aggregation controller 1000 and transmits the packet to the selected media. In a reception side, the aggregator functions to determine a marker for a packet received from a media, collects the packets, and transfer the collected packets to the IP layer 920 again. Such an operation may be substantially performed in the video relaying apparatus 110 of FIG. 1.

In response to the operation is performed, the monitor 1000-1, the packet sender 1000-2, the checker 1000-3, and the like of the video processing apparatus 120 according to an embodiment of the present invention may be operated as shown in FIG. 11. In other words, the packet sender 1000-2 which transmits the packet checks a bandwidth and then determines whether or not the bandwidth is larger than a threshold value (S1100, S1110), and perform an operation for checking whether or not another media path available by the user is present and distributing the packets in response to the bandwidth is larger than the threshold value (S1120-S1140). The packets are transmitted and checked by the above-described process of distributing and reassembling the packets (S1150-S1170).

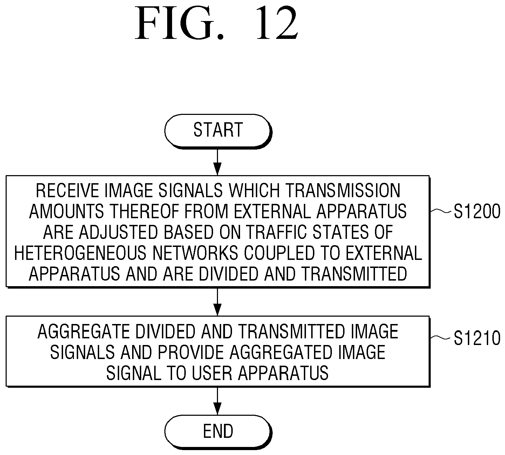

FIG. 12 is a flowchart illustrating a driving process of a video relaying apparatus according to an embodiment of the present invention.

For clarity, referring to FIG. 12 with FIG. 1, the video relaying apparatus 110 according to an embodiment of the present invention receives an image signal which a data transmission amount thereof from an external apparatus is adjusted based on the traffic states of heterogeneous networks coupled to an external apparatus (for example, video processing apparatus 120) and divided and transmitted (S1200). In other words, in response to a plurality of communication networks (for example, paths) which process a signal with different communication standards being present between the video relaying apparatus 110 and the video processing apparatus 120, it can be seen that the video relaying apparatus 110 receives more image data through a path having a relatively small degree of congestion as a confirmation result of the traffic states.

The video relaying apparatus 110 aggregates the divided and transmitted image signals and transmits the aggregated image signal to the user apparatus 100 (for example, user apparatus 2 100-2) (S1210). Here, the aggregation may include a process of combining the same type of content.

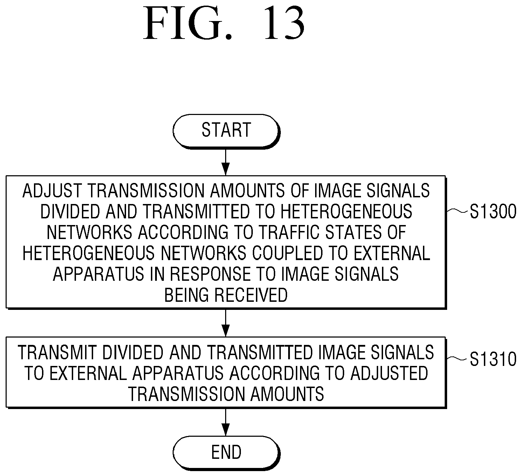

FIG. 13 is a flowchart illustrating a driving process of a video processing apparatus according to an embodiment of the present invention.

For clarity, referring to FIG. 13 with FIG. 1, the video processing apparatus 120 according to an embodiment of the present invention adjusts data transmission amount of the image signals divided and transmitted through the heterogeneous networks according to the traffic states of the heterogeneous networks coupled to an external apparatus (for example, the video relaying apparatus 110) in response to the image signals being received (S1300).

The video processing apparatus 120 transmits the divided and transmitted image signals to the external apparatus according to the adjusted data transmission amounts (S1310).

The video processing apparatus 120 according to an embodiment may process the image signal by dynamically changing network selection and the data transmission amount according to the traffic states of the heterogeneous networks and thus fast and stably process image content desired by the user.

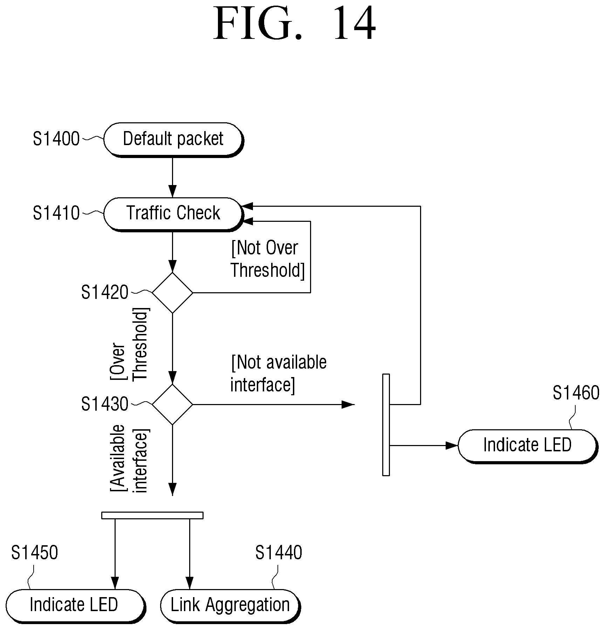

FIG. 14 is a diagram illustrating a driving process of a video processing apparatus according to another embodiment of the present invention.

For clarity, referring to FIG. 13 with FIG. 1, the video processing apparatus 120 receives a data packet of an image signal (S1400). Here, the data packet means that the image data of, for example, unit frames is packetized. Accordingly, the packet may further include various additional information for image data (for example, video data).

Then, the video processing apparatus 120 checks traffic states of the heterogeneous networks and determines whether or not the degree of congestion is larger than a threshold value (S1410). The video processing apparatus checks the traffic states of the networks and determines the current traffic amounts, for example, in home according to the networks.

As a determination result, in response to the traffic amount being not larger than the threshold value, the video processing apparatus may transmit the data packet according to a preset or changed data transmission amount and continuously perform the monitoring operation.

In response to the traffic amount is larger than the threshold value (S1420), the video processing apparatus performs a link aggregation process according to an embodiment of the present invention (S1430-S1440). For example, the video processing apparatus may reduce the data transmission amount of the network which is larger than the threshold value or terminate the data transmission and increase the data transmission amount of another network as one of the link aggregation processes.

The video processing apparatus 120 in the above-described process may notify the user that an available network is absent or the link aggregation process is currently performed (S1450, S1460).

It has been described that all components constituting the embodiment of the present invention are combined in one or are combined to operate, but the present invention is not limited to the embodiment. In other words, within the scope of the present invention, one or more components among all the components may be selectively combined to operate. All the components may be implemented with one individual hardware, but all or a part of the components may be selectively combined and may be implemented with a computer program having a program module which performs all or a part of functions combined in one or pieces of hardware. The codes and code segments constituting the computer program can be easily inferred by those skilled in the art. The embodiments of the present invention may be implemented by storing the computer program in non-transitory computer-readable media and reading and executing the computer program by the computer.

The non-transitory computer-recordable medium is not a medium configured to temporarily store data such as a register, a cache, or a memory but an apparatus-readable medium configured to permanently or semi-permanently store data. For example, the above-described various programs may be stored in the non-transitory apparatus-readable medium such as a CD, a digital versatile disc (DVD), a hard disc, a Blu-ray disc, a universal serial bus (USB), a memory card, or a read only memory (ROM) and provided.

The foregoing exemplary embodiments and advantages are merely exemplary and are not to be construed as limiting the present inventive concept. The description of the exemplary embodiments is intended to be illustrative, and not to limit the scope of the claims, and many alternatives, modifications, and variations will be apparent to those skilled in the art.

## Claims

1. A video processing apparatus coupled to an external apparatus through a plurality of communication networks, the video processing apparatus comprising:
a communication interface configured to divide an image signal and transmit divided image signals to the external apparatus through the plurality of communication networks; and
a processor configured to adjust data transmission amounts of the plurality of communication networks according to traffic states of the plurality of communication networks.

2. The video processing apparatus according to claim 1, wherein the processor adjusts the data transmission amounts in response to degree of congestion in the plurality of communication networks being equal to or larger than a preset threshold value.

3. The video processing apparatus according to claim 1, wherein the processor includes a parser configured to divide the received image signal.

4. The video processing apparatus according to claim 1, further comprising a display configured to inform a user that the processor is being operated.

5. The video processing apparatus according to claim 1, wherein the communication interface includes a plurality of communication modules configured to process and transmit the image signals with different standards related to the plurality of communication networks.

6. The video processing apparatus according to claim 5, wherein the plurality of communication modules includes a short-range communication module.

7. A driving method of a video processing apparatus coupled to an external apparatus through a plurality of communication networks, the method comprising the steps of:
dividing an image signal and transmitting divided image signals to the external apparatus through the plurality of communication networks different from each other; and
adjusting data transmission amounts of the plurality of communication networks according to traffic states of the plurality of communication networks.

8. The method according to claim 7, wherein the step of adjusting the data transmission amounts includes adjusting the data transmission amounts in response to degree of congestion in the plurality of communication networks is equal to or larger than a preset threshold value.

9. The method according to claim 7, further comprising the step of dividing the received image signal according to the traffic states of the plurality of communication networks.

10. The method according to claim 7, further comprising the step of notifying a user that an operation of adjusting the data transmission amounts is being performed.

11. The method according to claim 7, wherein the step of transmitting includes processing and transmitting the image signal with different standards related to the plurality of communication networks.

12. The method according to claim 11, wherein the different standards related to the plurality of communication networks includes a short-range communication method.
